(19) Europäisches Patentamt
European Patent Office
Office européen des brevets

(11) **EP 3 074 719 B1**

(12) **EUROPÄISCHE PATENTSCHRIFT**

(45) Veröffentlichungstag und Bekanntmachung des Hinweises auf die Patenterteilung:
**08.11.2017  Patentblatt 2017/45**

(21) Anmeldenummer: **14796137.9**

(22) Anmeldetag: **12.11.2014**

(51) Int Cl.:
*G01B 11/02* (2006.01)    *G01B 11/06* (2006.01)

(86) Internationale Anmeldenummer:
**PCT/EP2014/074348**

(87) Internationale Veröffentlichungsnummer:
**WO 2015/078693 (04.06.2015 Gazette 2015/22)**

(54) **VORRICHTUNG ZUR BERÜHRUNGSLOSEN OPTISCHEN ABSTANDSMESSUNG**

DEVICE FOR CONTACTLESS OPTICAL DISTANCE MEASUREMENT

DISPOSITIF DE MESURE DE DISTANCE OPTIQUE SANS CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2013  DE 102013113265**

(43) Veröffentlichungstag der Anmeldung:
**05.10.2016  Patentblatt 2016/40**

(73) Patentinhaber: **GRINTECH GmbH**
**07745 Jena (DE)**

(72) Erfinder:
• **GROSS, Herbert**
**07751 Großpürschütz (DE)**
• **MESSERSCHMIDT, Bernhard**
**07749 Jena (DE)**
• **ZHONG, Minyi**
**07745 Jena (DE)**
• **KUNZE, Marcel**
**07749 Jena (DE)**

(74) Vertreter: **Epping - Hermann - Fischer Patentanwaltsgesellschaft mbH**
**Schloßschmidstraße 5**
**80639 München (DE)**

(56) Entgegenhaltungen:
**EP-A1- 1 975 554    GB-A- 2 497 792**
**US-B1- 8 212 997**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur berührungslosen optischen Abstandsmessung.

Diese Patentanmeldung beansprucht die Priorität der deutschen Patentanmeldung 10 2013 113 265.0, deren Offenbarungsgehalt hiermit durch Rückbezug aufgenommen wird.

Eine Vorrichtung zur berührungslosen optischen Abstandsmessung wird beispielsweise in der Druckschrift DE 10 2006 017 400 A1 beschrieben. Die Vorrichtung weist einen Messkopf mit einem abbildenden optischen System mit chromatischer Aberration auf. Durch das optische System wird eine Lichtaustrittsfläche einer Lichtquelle in wellenlängenabhängige Brennebenen abgebildet und erzeugt dort einen Messfleck von beispielsweise wenigen Mikrometern Durchmessern, in dessen Bereich sich ein zu vermessender Gegenstand befinden kann. Das vom Gegenstand zurückreflektierte Licht durchläuft das optische System in umgekehrter Richtung und wird beispielsweise in ein Faserende eingekoppelt, durch das das Licht in den Messkopf eingetreten ist. Eine scharfe Abbildung der Lichtaustrittsfläche der Lichtquelle, beispielsweise einer Faserendfläche, auf den zu vermessenden Gegenstand und umgekehrt erfolgt aufgrund der chromatischen Aberration des optischen Systems jeweils nur für eine bestimmte Wellenlänge A. Bei dieser Wellenlänge $\lambda$ zeigt sich bei einer spektralen Analyse des reflektierten Lichts daher ein scharfer Peak, aus dessen Wellenlänge durch eine Kalibrierung der Abstand zwischen dem Messkopf und dem zu vermessenden Gegenstand bestimmt werden kann.

Ein optischer Abstandssensor, der auf diesem Prinzip der konfokalen Abbildung durch ein Linsensystem mit chromatischer Aberration beruht, ist beispielsweise auch aus der Druckschrift US 2008/0239278 A1 bekannt.

Die aus dem Stand der Technik bekannten Vorrichtungen zur berührungslosen optischen Abstandsmessung weisen typischerweise mindestens drei oder vier Linsen auf, um einen durch die chromatische Aberration des Linsensystems vorgegebenen Messbereich zu erzeugen.

Der Erfindung liegt die Aufgabe zugrunde, eine verbesserte Vorrichtung zur berührungslosen optischen Abstandsmessung anzugeben, die sich insbesondere durch eine vergleichsweise einfache und kostengünstige Bauweise mit vorteilhaft geringen Abmessungen und weiterhin durch eine hohe Auflösung und Messgenauigkeit auszeichnet.

Diese Aufgabe wird durch eine Vorrichtung zur berührungslosen optischen Abstandsmessung gemäß dem geltenden Anspruch 1 gelöst. Vorteilhafte Ausgestaltungen und Weiterbildungen der Erfindung sind Gegenstand der abhängigen Ansprüche.

Gemäß zumindest einer Ausgestaltung weist die Vorrichtung zur berührungslosen optischen Abstandsmessung eine Lichtquelle, eine Lichtanalyseeinheit und einen Messkopf auf. Die Lichtquelle und die Lichtanalyseeinheit können beispielsweise mit einer Lichtleitfaser mit dem Messkopf verbunden sein. Es ist möglich, dass die Lichtquelle und die Lichtanalyseeinheit zusammen eine Steuereinheit der Vorrichtung ausbilden und beispielsweise in ein gemeinsames Gehäuse integriert sind, das über eine Lichtleitfaser mit dem Messkopf verbunden ist.

Die Lichtquelle der Vorrichtung ist eine polychromatische Lichtquelle, die zur Aussendung von Licht eines kontinuierlichen Spektrums in den Messkopf geeignet ist. Die Lichtquelle ist bevorzugt eine Weißlichtquelle, beispielsweise eine Weißlicht-LED, eine Halogenlampe oder eine Xenon-Lampe. Zur Erzielung besonders kompakter Abmessungen ist die Verwendung einer Weißlicht-LED besonders vorteilhaft. Die polychromatische Lichtquelle kann beispielsweise im sichtbaren Spektralbereich emittieren, der insbesondere den Wellenlängenbereich von 450 nm bis 700 nm enthält.

Die Lichtanalyseeinheit der Vorrichtung ist zum Empfang und zur spektralen Analyse von aus dem Messkopf empfangenen Licht geeignet. Auf diese Weise kann das von einem zu vermessenden Gegenstand in den Messkopf reflektierte oder gestreute Licht spektral analysiert werden, sodass ein zu messender Abstand des Gegenstands aus dem analysierten Spektrum bestimmbar ist.

Der Messkopf weist eine Blendenöffnung für den Eintritt des Lichts der Lichtquelle in den Messkopf und für den Austritt des empfangenen Lichts, insbesondere des von einem zu vermessenden Gegenstand reflektierten oder gestreuten Lichts, aus dem Messkopf in Richtung zur Lichtanalyseeinheit auf. Die Blendenöffnung dient also sowohl als Lichteintrittsapertur als auch als Lichtaustrittsapertur für den Messkopf. Die Blendenöffnung ist vorzugsweise kreisrund und weist einen Radius $r_{PH}$ auf.

Weiterhin weist der Messkopf ein optisches Linsensystem auf, welches eine chromatische Längsaberration aufweist. Mit anderen Worten ist die Position des Fokus auf der optischen Achse des Linsensystems von der Wellenlänge abhängig. Das an der Blendenöffnung in den Messkopf eintretende Licht der Lichtquelle stellt einen Lichtfleck dar, der von dem optischen Linsensystem in einen Messfleck abgebildet wird, dessen axiale Position von der Wellenlänge abhängt. Da eine polychromatische Lichtquelle verwendet wird, wird der Lichtfleck der Blendenöffnung aufgrund der chromatischen Längsaberration des optischen Linsensystems in einen Bereich von Messflecken abgebildet, die unterschiedliche Positionen auf der optischen Achse aufweisen. Insbesondere führt die chromatische Aberration dazu, dass der Fokus für kürzere Wellenlängen näher an dem optischen Linsensystem liegt als für längere Wellenlängen.

Das von einem Gegenstand zurückreflektierte oder gestreute Licht wird im umgekehrten Strahlengang nur dann scharf auf die Blendenöffnung des Messkopfs abgebildet, wenn sich der zu vermessende Gegenstand im Fokus für eine bestimmte Wellenlänge befindet. Bei der spektralen Analyse des in die Blendenöffnung zurückreflektierten oder zurückgestreuten Lichts zeigt sich daher ein Intensitätsmaximum bei der Wellenlänge, in dessen Fokus sich der Gegenstand befindet. Aus der Wellenlänge, bei der das Intensitätsmaximum auftritt, kann daher der Abstand des Gegenstands von dem Messkopf bestimmt werden.

Der Messbereich des Messkopfs liegt zwischen dem Fokus, der sich für die kürzeste nutzbare Wellenlänge der Lichtquelle ergibt, und dem Fokus, der sich für die längste nutzbare Wellenlänge der Lichtquelle ergibt. Zur Erzielung eines großen Messbereichs ist es daher vorteilhaft, eine breitbandige Lichtquelle zu verwenden und weiterhin ein optisches Linsensystem mit einer großen chromatischen Aberration zu verwenden.

Bei der hierin beschriebenen Vorrichtung besteht das optische Linsensystem des Messkopfs vorteilhaft nur aus einer ersten refraktiven Linse und aus einer zweiten refraktiven Linse, wobei mindestens eine der refraktiven Linsen mindestens eine asphärisch gekrümmte Linsenfläche aufweist. Die asphärisch gekrümmte Linsenfläche kann konvex oder konkav gekrümmt sein. Die übrigen Linsenflächen der beiden refraktiven Linsen sind plan, sphärisch konkav oder sphärisch konvex ausgebildet. Bevorzugt weist mindestens eine der refraktiven Linsen eine plane Linsenfläche auf, da auf diese Weise der Herstellungsaufwand und die Toleranzempfindlichkeit vermindert werden.

Die erste und die zweite refraktive Linse des optischen Linsensystems weisen vorteilhaft ein optisches Material mit einer Abbe-Zahl $20 \leq v_d \leq 41$ auf. Die Abbe-Zahl ist ein Maß für die Dispersion eines optischen Materials. Die Dispersion, d. h. die Abhängigkeit der Brechzahl von der Wellenlänge, ist umso größer, je kleiner die Abbe-Zahl ist. Da für die erste und/oder die zweite refraktive Linse ein optisches Material mit einer vergleichsweise kleinen Abbe-Zahl $20 \leq v_d \leq 41$ verwendet wird, zeichnet sich das optische Linsensystem vorteilhaft durch eine hohe Dispersion und somit durch eine hohe chromatische Längsaberration aus.

Das optische Linsensystem weist vorteilhaft eine derartige chromatische Längsaberration auf, dass ein Messbereich, der gleich einer axialen Fokusverschiebung des Messkopfs zwischen den Wellenlängen 450 nm und 700 nm ist, zwischen einschließlich 0,2 mm und einschließlich 10 mm beträgt. Mit anderen Worten ist bei dem optischen Linsensystem der Fokus für die Wellenlänge 450 nm um mindestens 0,2 mm und höchstens 10 mm von dem Fokus für die Wellenlänge 700 nm beabstandet. Die Verwendung des sichtbaren Spektralbereichs zwischen 450 nm und 700 nm ist von Vorteil, da neben der Verfügbarkeit kostengünstiger Lichtquellen auch optische Materialien mit großer Dispersion zur Verfügung stehen. Die Definition des Messbereichs als Fokusverschiebung zwischen den Wellenlängen 450 nm und 700 nm schließt aber nicht aus, dass die Vorrichtung bei anderen Wellenlängen verwendet wird.

Dadurch, dass das optische Linsensystem des Messkopfs nur aus zwei refraktiven Linsen besteht, ist der Messkopf vorteilhaft einfach aufgebaut und zeichnet sich im Vergleich zu optischen Linsensystemen mit größerer Linsenanzahl durch ein geringes Gewicht und eine kurze Baulänge aus. Die Ausbildung des optischen Linsensystems aus nur zwei Linsen wird bei der hierin beschriebenen Vorrichtung insbesondere dadurch ermöglicht, dass mindestens eine der beiden refraktiven Linsen mindestens eine asphärisch gekrümmte Linsenfläche aufweist. Durch die mindestens eine asphärisch gekrümmte Linsenfläche können optische Abbildungsfehler, welche die Auflösung und somit die Messgenauigkeit vermindern würden, besser korrigiert werden als bei Verwendung von sphärischen Linsen.

Eine Herausforderung beim Design des optischen Linsensystems des Messkopfs besteht insbesondere darin, trotz der gewollten hohen chromatischen Aberration des Linsensystems andere relevante Abbildungsfehler, insbesondere die sphärische Aberration für verschiedene Wellenlängen, den so genannten Sphärochromatismus, zu minimieren. Es hat sich herausgestellt, dass eine gute Korrektur des Sphärochromatismus zur Erzielung einer hohen Messauflösung sogar bei einem Linsensystem aus nur zwei refraktiven Linsen erzielt werden kann, wenn zumindest eine der Linsenflächen der refraktiven Linsen eine asphärisch gekrümmte Linsenfläche ist. Die asphärisch gekrümmte Linsenfläche weist vorzugsweise eine zur optischen Achse radialsymmetrische Krümmung auf.

Zum Design des optischen Linsensystems, insbesondere der Krümmungsradien der sphärischen Linsen, der Form der asphärischen Linsenfläche, der Abstände der Linsen untereinander, der Blendenöffnung und des Messbereich kann ein Simulationsprogramm eingesetzt werden. Geeignete Simulationsprogramme zum Design optischer System sind dem Fachmann an sich bekannt.

Bei der erfindungsgemäßen Ausgestaltung des optischen Linsensystems weisen sowohl die erste als auch die zweite refraktive Linse ein optisches Material mit einer Abbe-Zahl $20 \leq v_d \leq 41$ auf. Bei dieser Ausgestaltung sind vorteilhaft beide Linsen des optischen Linsensystems des Messkopfs aus einem optischen Material mit einer sehr großen Dispersion ausgebildet. Auf diese Weise lässt sich vorteilhaft eine besonders große chromatische Aberration und somit ein vergleichsweise großer Messbereich erzielen. Als optisches Material mit hoher Dispersion sind insbesondere Schwerflintgläser geeignet, die typischerweise eine Abbe-Zahl $v_d$ im Bereich zwischen 20 und 30 aufweisen.

Bei der erfindungsgemäßen Ausgestaltung der Vorrichtung beträgt ein Produkt aus dem Messbereich MR und dem Quadrat der numerischen Apertur $NA_{MR}$ des optischen Linsensystems auf der Seite des Messbereichs zwischen einschließlich 100 $\mu$m und einschließlich 450 $\mu$m. Es gilt also 100 $\mu$m $\leq$ MR * $NA^2_{MR} \leq$ 450 $\mu$m. Der Messbereich MR ist, wie zuvor beschrieben, insbesondere gleich einer axialen Fokusverschiebung des Linsensystems zwischen den Wellenlängen 450 nm und 700 nm. Die numerische Apertur des optischen Linsensystems auf der Seite des Messbereichs ist $NA_{MR} = n \sin \alpha_{MR}$, wobei n der Brechungsindex des Umgebungsmediums im Messbereich ist, der in Luft etwa 1

beträgt. Der Winkel $\alpha_{MR}$ ist der Winkel zwischen der optischen Achse und einem Randstrahl des Lichtbündels, das ausgehend vom Messbereich, beispielsweise nach Reflexion an dem zu vermessenden Gegenstand, auf die zweite Linse des optischen Linsensystems trifft. Es konnte gezeigt werden, dass sich mit zunehmender numerischer Apertur $NA_{MR}$ auf der Seite des Messbereichs das Auflösungsvermögen verbessert. Der angegebene bevorzugte Wertebereich $100\ \mu m \leq MR * NA^2_{MR} \leq 450\ \mu m$ beschreibt einen Bereich, in dem ein guter Kompromiss zwischen der Größe des Messbereichs und der durch die numerische Apertur bedingten Auflösung des Systems besteht. Ein großer Messbereich kann beispielsweise durch Verwendung eines Linsensystems mit sehr langer Brennweite erzielt werden, wodurch sich aber auch die numerische Apertur und damit das Auflösungsvermögen vermindert. Beim optischen Design des Linsensystems wird daher vorzugsweise ein Kompromiss zwischen der Größe des Messbereichs und der numerischen Apertur gewählt, der sich in dem angegebenen Wertebereich für das Produkt $NA^2_{MR} * MR$ ausdrückt. In dem angegebenen Wertebereich wird vorteilhaft sowohl eine hohe Auflösung als auch ein vergleichsweise großer Messbereich erzielt.

Bei einer weiteren vorteilhaften Ausgestaltung der Vorrichtung beträgt ein Produkt aus dem Radius $r_{PH}$ der Blendenöffnung und der numerischen Apertur $NA_{PH}$ auf der Seite der Blendenöffnung zwischen einschließlich 1,0 $\mu m$ und einschließlich 5,5 $\mu m$. Es gilt also $1,0\ \mu m \leq r_{PH} * NA_{PH} \leq 5,5\ \mu m$. Die numerische Apertur auf der Seite der Blendenöffnung ist $NA_{PH} = n \sin \alpha_{PH}$, wobei n der Brechungsindex des Umgebungsmediums ist, der in Luft etwa 1 beträgt. Der Winkel $\alpha_{PH}$ ist der Winkel zwischen der optischen Achse und einem Randstrahl des Lichtbündels, das ausgehend von der Blendenöffnung auf die erste Linse des optischen Linsensystems trifft. Unter dem Begriff der numerischen Apertur ist hier und im Folgenden die effektiv wirksam numerische Apertur zu verstehen, die berücksichtigt, dass der Winkel $\alpha_{PH}$ des Randstrahls nicht nur durch den Öffnungswinkel des aus der Blendenöffnung austretenden Lichtbündels, sondern gegebenenfalls auch durch eine oder mehrere nachfolgende Blenden oder durch einen der Durchmesser Linsen begrenzt sein kann.

Das Produkt $r_{PH} * NA_{PH}$ wird hier und im Folgenden als Strahlparameterprodukt bezeichnet. Ein großes Strahlparameterprodukt, d. h. eine vergleichsweise große Blendenöffnung $r_{PH}$ und eine große numerische Apertur $NA_{PH}$, ist vorteilhaft, wenn ein großes Signal-Rausch-Verhältnis erzielt werden soll, da in diesem Fall eine hohe Lichtleistung zur Verfügung steht. Andererseits hat sich herausgestellt, dass sich das Auflösungsvermögen mit zunehmendem Strahlparameterprodukt $r_{PH} * NA_{PH}$ verringert, was sich durch vergrößerte spektrale Peak-Breiten bei der Analyse des vom zu vermessenden Gegenstand reflektierten Lichts zeigt. Im Gegensatz zur numerischen Apertur $NA_{MR}$ auf der Seite des Messbereichs, die zur Erzielung eines hohen Auflösungsvermögens möglichst groß sein sollte, ist also auf der Seite der Blendenöffnung eine kleine numerische Apertur $NA_{PH}$ und eine kleiner Blendenradius $r_{PH}$ für das Auflösungsvermögen vorteilhaft. In dem angegebenen bevorzugten Wertebereich für das Strahlparameterprodukt $r_{PH} * NA_{PH}$ wird ein guter Kompromiss zwischen der Lichtstärke des Systems und der daraus resultierenden Messzeit einerseits und der Auflösung und der daraus resultierenden Messgenauigkeit andererseits erzielt. Werte des Strahlparameterprodukts im Bereich der unteren Grenze 1,0 $\mu m$ sind für hochauflösende Messungen mit größerer Messzeit geeignet, während Werte im Bereich der oberen Grenze 5,5 $\mu m$ für vergleichsweise schnelle Messungen mit etwas geringerer Auflösung geeignet sind.

Bei einer bevorzugten Ausgestaltung der Vorrichtung sind die Lichtquelle und die Lichtanalyseeinheit mittels einer Lichtleitfaser mit dem Messkopf verbunden. Insbesondere kann das von der Lichtquelle emittierte Licht über die Lichtleitfaser zum Messkopf geleitet werden, und das vom Gegenstand reflektierte Licht in umgekehrter Strahlrichtung durch die gleiche Lichtleitfaser in Richtung der Lichtanalyseeinheit geführt werden. Das zurückreflektierte Licht kann beispielsweise nach dem Passieren der Lichtleitfaser mittels eines Strahlteilers zur Lichtanalyseeinheit geleitet werden. Die Verbindung der Lichtquelle und der Lichtanalyseeinheit mittels einer flexiblen Lichtleitfaser ermöglicht vorteilhaft, dass der Messkopf, der sich bei der hierin beschriebenen Vorrichtung durch geringe Abmessungen und geringes Gewicht auszeichnet, Platz sparend in der Nähe des zu vermessenden Objekts positioniert werden kann. Die Lichtquelle und die Lichtanalyseeinheit befinden sich in diesem Fall im Bereich des entgegengesetzten Endes der Lichtleitfaser. Als Lichtleitfaser wird vorzugsweise eine Lichtleitfaser mit einem Faserkerndurchmesser von 9 $\mu m$ bis 50 $\mu m$ und einer effektiven numerischen Apertur $NA_{PH}$ von 0,07 bis 0,22 verwendet. Die effektive numerische Apertur kann durch die Lichtleitfaser, durch die Durchmesser der Linsen, oder gegebenenfalls durch eine oder mehrere nachfolgende Blenden begrenzt sein.

Wenn die Lichtquelle und die Lichtanalyseeinheit mittels einer Lichtleitfaser mit dem Messkopf verbunden sind, kann die Blendenöffnung des Messkopfs eine Faserendfläche der Lichtleitfaser sein. Der Radius $r_{PH}$ der Blendenöffnung ist in diesem Fall gleich dem Radius der Lichtleitfaser.

Bei einer Ausgestaltung ist an einer dem optischen Linsensystem zugewandten Faserendfläche ein optisches Element angeordnet. Das optische Element ist vorteilhaft fest mit der Faserendfläche verbunden und kann insbesondere mit der Faserendfläche verkittet oder auf diese aufgepresst sein. Das optische Element weist vorteilhaft eine Brechzahl auf, die an die Brechzahl der Faser angepasst ist, sodass eine Rückreflexion von Licht an der Faserendfläche vermindert wird.

Das mit der Faserendfläche verbundene optische Element kann verschiedene Ausgestaltungen aufweisen. Bei einer Ausgestaltung ist das optische Element ein optisches Fenster. Unter einem optischen Fenster wird hierbei insbesondere ein Element aus einem transparenten Material verstanden, welches keine Linsenfunktion aufweist und beispielsweise an einer dem optischen Linsensystem zugewandten Endfläche plan ausgebildet ist.

Bei weiteren vorteilhaften Ausgestaltungen weist das optische Element eine Linsenfunktion auf. Beispielsweise ist das optische Element eine refraktive Zerstreuungslinse. In diesem Fall ist eine dem optischen Linsensystem zugewandte Endfläche des optischen Elements beispielsweise konkav ausgebildet. Mit der refraktiven Zerstreuungslinse kann die Divergenz des aus der Lichtleitfaser austretenden Lichtkegels vorteilhaft vergrößert werden. Dies ermöglicht vorteilhaft eine kürzere Bauform des Messkopfs.

Bei einer weiteren vorteilhaften Ausgestaltung ist das optische Element eine Gradientenindex-Zerstreuungslinse. Die Gradientenindex-Zerstreuungslinse dient ähnlich wie die zuvor beschriebene refraktive Zerstreuungslinse vorteilhaft zur Vergrößerung der Divergenz des aus der Lichtleitfaser austretenden Lichtbündels mit dem Vorteil einer Verkürzung der Baulänge des Messkopfs. Die Gradientenindexlinse kann insbesondere ein radiales Brechzahlprofil aufweisen, bei dem die Brechzahl auf der optischen Achse minimal ist und nach außen hin zunimmt. Das radiale Brechzahlprofil kann insbesondere nahezu parabolisch sein. "Nahezu parabolisch" kann in diesem Zusammenhang bedeuten, dass sich der radiale Verlauf der Brechzahl als Polynomfunktion beschreiben lässt, die mindestens einen vom Quadrat des radialen Abstands von der optischen Achse abhängigen Summanden aufweist, wobei die Polynomfunktion aber auch weitere Summanden zur Korrektur von Abbildungsfehlern enthalten kann. Die Gradientenindex-Linse weist vorteilhaft eine planare optische Endfläche auf und kann kostengünstig in großen Stückzahlen hergestellt werden.

Bei einer weiteren vorteilhaften Ausgestaltung ist das optische Element eine Gradientenindex-Sammellinse. Eine solche Gradientenindex-Sammellinse besitzt vorzugsweise ein radiales Brechzahlprofil, bei dem die Brechzahl auf der optischen Achse maximal ist und nach außen hin abnimmt. Das radiale Brechzahlprofil kann insbesondere nahezu parabolisch sein. Wie die zuvor beschriebene Gradientenindex-Zerstreuungslinse weist die Gradientenindex-Sammellinse vorteilhaft eine planare optische Endfläche auf und kann kostengünstig in großen Stückzahlen hergestellt werden. Die Gradientenindex-Sammellinse kann zur Vergrößerung der Divergenz des aus der Lichtleitfaser austretenden Lichtbündels eingesetzt werden, indem die Strahlung in einen Brennpunkt fokussiert wird, der noch innerhalb oder in der Nähe der Gradientenindex-Sammellinse liegt, sodass sich die Strahlung hinter dem Brennpunkt wieder divergiert.

Bei einer weiteren vorteilhaften Ausgestaltung ist das optische Element eine Gradientenindex-Linse, welche einen durch die Faserendfläche gebildeten Lichtfleck der Lichtquelle in ein oder mehrere Zwischenbilder abbildet. Bei dieser Ausgestaltung ist die Gradientenindex-Linse vorteilhaft eine Gradientenindex-Sammellinse, die ein radiales, vorzugsweise nahezu parabolisches, Brechzahlprofil mit maximaler Brechzahl auf der optischen Achse aufweist. Ein solches radiales Brechzahlprofil erzeugt einen kontinuierlichen, kosinusförmigen Strahlverlauf innerhalb der Gradientenindex-Sammellinse, dessen Periode hier und im Folgenden als Pitchlänge bezeichnet wird.

Eine Gradientenindex-Sammellinse, deren Länge gleich einer Pitchlänge ist, bildet die Lichteintrittsfläche seitenrichtig auf die Austrittsfläche ab. Bei einer Länge, die gleich einer halben Pitchlänge ist, entsteht ein umgekehrtes Bild. Eine Gradientenindex-Sammellinse, deren Länge größer als die halbe Pitchlänge ist, erzeugt daher mindestens ein Zwischenbild der Eintrittsfläche. Bei der hier beschriebenen Ausgestaltung weist die Gradientenindex-Linse eine Länge auf, die größer oder gleich einer halben Pitchlänge ist, bevorzugt größer oder gleich einer Pitchlänge, so dass sie die Lichteintrittsfläche in ein oder bevorzugt mehrere Zwischenbilder abbildet. Aufgrund der typischen Abhängigkeit der Pitchlänge einer Gradientenindex-Linse von der Wellenlänge, durch die die Pitchlänge mit wachsender Wellenlänge steigt, kommt es bereits in dem einen oder den mehreren Zwischenbildern zu einer chromatischen Fokusverschiebung, welche die gesamte chromatische Aberration des Messkopfs verstärkt und auf diese Weise vorteilhaft einen vergrößerten Messbereich erzeugt.

Bei den zuvor beschriebenen vorteilhaften Ausgestaltungen, bei denen an einer dem optischen Linsensystem zugewandten Faserendfläche jeweils ein optisches Element angeordnet ist, ist eine dem optischen Linsensystem des Messkopfs zugewandte Endfläche des optischen Elements vorzugsweise mit einer reflexionsmindernden Beschichtung versehen. Auf diese Weise werden Reflexionsverluste beim Auskoppeln des Lichts der Lichtquelle aus dem optischen Element und beim Einkoppeln des zurückreflektierten Lichts in das optische Element vorteilhaft vermindert.

Bei einer weiteren vorteilhaften Ausgestaltung ist zwischen der Faserendfläche der Lichtleitfaser und dem optischen Element ein Abstandselement angeordnet. Bei dieser Ausgestaltung grenzt das optische Element also nicht unmittelbar an die Faserendfläche an, sondern ist durch das Abstandselement, beispielsweise ein optisches Fenster, von der Faserendfläche beabstandet.

Bei einer weiteren vorteilhaften Ausgestaltung sind die Faserendfläche der Lichtleitfaser und eine der Faserendfläche zugewandte Oberfläche des optischen Elements oder des Abstandselements schräg zur optischen Achse ausgebildet. Auf diese Weise wird eine Rückreflexion von Licht an der Grenzfläche zwischen der Faserendfläche und dem optischen Element oder dem Abstandselement vorteilhaft weiter vermindert.

Bei einer weiteren vorteilhaften Ausgestaltung ist in dem Messkopf ein Strahlumlenkelement angeordnet. Diese Ausgestaltung ist dann vorteilhaft, wenn das Licht in seitlicher Richtung in Richtung des zu vermessenden Objekts aus dem Messkopf austreten soll. Dies ist beispielsweise dann sinnvoll, wenn Hohlräume oder Objekte in flachen Zwischenräumen vermessen werden sollen. Das Strahlumlenkelement kann beispielsweise ein Prisma oder ein Spiegel sein.

Insbesondere kann eine Strahlumlenkung um 90° vorgesehen sein. Das Strahlumlenkelement kann dem optischen Linsensystem in Strahlrichtung nachfolgen, zwischen den beiden refraktiven Linsen angeordnet sein, oder zwischen der Blendenöffnung und dem optischen Linsensystem angeordnet sein.

Die Erfindung wird im Folgenden anhand von Ausführungsbeispielen im Zusammenhang mit den Figuren 1 bis 11 näher erläutert.

Es zeigen:

Figur 1          eine schematische Darstellung eines Querschnitts durch eine Vorrichtung zur berührungslosen optischen dimensionellen Vermessung eines Gegenstands gemäß einem Ausführungsbeispiel,

Figuren 2A     bis 2J jeweils einen Querschnitt durch das optische Linsensystem des Messkopfs bei verschiedenen Ausführungsbeispielen und

Figuren 3       bis 11 jeweils eine schematische Darstellung des Messkopfs bei verschiedenen Ausführungsbeispielen.

Gleiche oder gleich wirkende Bestandteile sind in den Figuren jeweils mit den gleichen Bezugszeichen versehen. Die dargestellten Bestandteile sowie die Größenverhältnisse der Bestandteile untereinander sind nicht als maßstabsgerecht anzusehen.

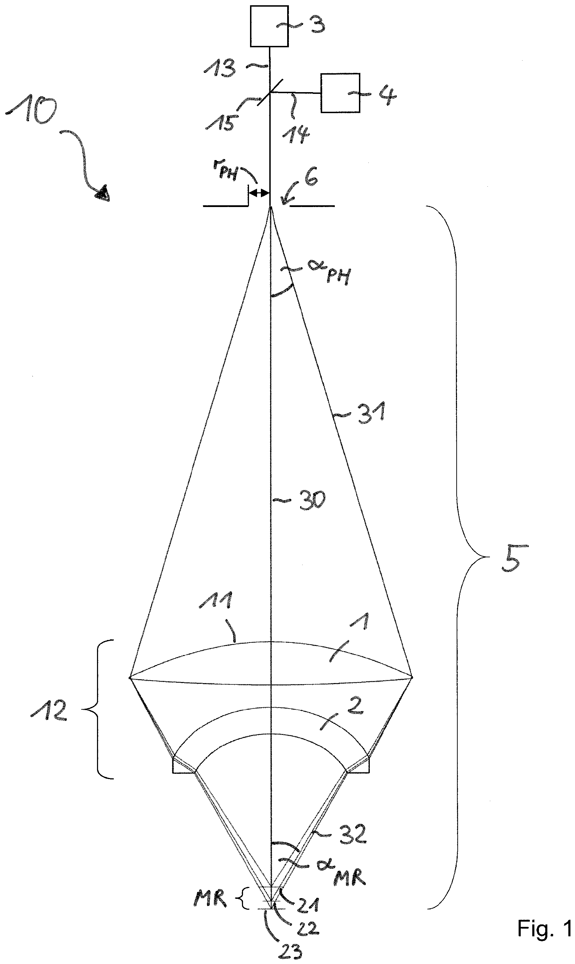

Die in Figur 1 schematisch dargestellte Vorrichtung 10 zur berührungslosen optischen dimensionellen Vermessung eines Gegenstands gemäß einem Ausführungsbeispiel enthält eine Lichtquelle 3, eine Lichtanalyseeinheit 4 und einen Messkopf 5.

Die Lichtquelle 3 emittiert polychromatisches Licht 13, d. h. Licht 13 mit einem kontinuierlichen Spektrum, das durch eine Blendenöffnung 6 in den Messkopf 5 eintritt. Die Lichtquelle 3 ist vorzugsweise eine Weißlichtquelle, wie beispielsweise eine Weißlicht emittierende LED, eine Halogenlampe oder eine Xenon-Lampe. Die Blendenöffnung 6 ist vorzugsweise eine kreisrunde Öffnung mit einem Radius $r_{PH}$. Bei der Blendenöffnung 6 kann es sich zum Beispiel um eine Lochblende oder um die Faserendfläche einer Lichtleitfaser handeln.

Der Messkopf 5 der Vorrichtung 10 weist ein optisches Linsensystem 12 auf, das aus einer ersten refraktiven Linse 1 und einer zweiten refraktiven Linse 2 besteht. Das optische Linsensystem 12 weist eine chromatische Längsaberration auf, sodass ein durch die Blendenöffnung 6 ausgebildeter Lichtfleck der polychromatischen Lichtquelle 3 in verschiedene Brennebenen 21, 22, 23 abgebildet wird. Licht mit einer kürzeren Wellenlänge wird in eine Brennebene 21 abgebildet, die sich auf der optischen Achse näher an dem optischen Linsensystem 12 befindet als eine Brennebene 23 für Licht mit einer längeren Wellenlänge. Für die Messung kann beispielsweise der Wellenlängenbereich zwischen 450 nm und 700 nm vorgesehen sein. In diesem Fall wird beispielsweise das Licht mit der kürzesten Wellenlänge 450 nm in eine Brennebene 21 und das Licht mit der längsten Wellenlänge 700 nm in eine weiter von dem Linsensystem 12 entfernte Brennebene 23 fokussiert. Die Fokusverschiebung, die das optische Linsensystem 12 aufgrund der chromatischen Aberration zwischen der kürzesten genutzten Wellenlänge und der längsten genutzten Wellenlänge erzeugt, definiert einen Messbereich MR, in dem ein zu vermessender Gegenstand vermessen werden kann.

Wenn ein zu vermessender Gegenstand in dem Messbereich MR positioniert ist, wird ein Teil des eingestrahlten Lichts zu dem optischen Linsensystem 12 zurückreflektiert oder gestreut. Licht derjenigen Wellenlänge, in deren Brennebene sich der zu vermessende Gegenstand befindet, wird von dem optischen Linsensystem 12 in umgekehrter Strahlrichtung auf die Blendenöffnung 6 fokussiert, während Licht anderer Wellenlängen nicht scharf auf die Blendenöffnung 6 abgebildet wird und somit hohe Verluste erleidet. Das in umgekehrter Strahlrichtung durch die Blendenöffnung 6 zurückreflektierte Licht kann beispielsweise mit einem Strahlteiler 15 der Lichtanalyseeinheit 4 zugeführt werden. Die Lichtanalyseeinheit 4 ist beispielsweise ein Spektrometer, in dem das zu untersuchende Messlicht 14 spektral analysiert wird.

Im Spektrum des Messlichts 14 tritt bei der Wellenlänge, in deren Brennebene sich der zu vermessende Gegenstand befindet, ein scharfes Maximum auf, aus dessen Position bei entsprechender Kalibrierung der Abstand des zu vermessenden Gegenstands bestimmt werden kann. Durch Abstandsmessungen an verschiedenen Positionen eines Gegenstands, insbesondere in einem zweidimensionalen Raster, kann ein Höhenprofil des Gegenstands bestimmt werden. Weiterhin bietet das Messsystem auch die Möglichkeit, die Dicke dünner transparenter Schichten hochgenau zu bestimmen, bei denen eine Rückreflexion an einer vorderseitigen und rückseitigen Grenzfläche erfolgt, so dass zwei Intensitätsmaxima bei verschiedenen Wellenlängen im Messlicht 14 auftreten, aus deren Differenz die Dicke bestimmbar ist.

Das Messprinzip der Vorrichtung macht sich die chromatische Längsaberration des optischen Linsensystems 12 zunutze. Um eine hohe Messauflösung zu erzielen, ist es aber von wesentlicher Bedeutung, andere optische Abbildungsfehler, insbesondere den Sphärochromatismus, so weit wie möglich zu reduzieren. Bei der hierin beschriebenen Vorrichtung wird dies mit einem optischen Linsensystem 12 erreicht, das aus nur zwei refraktiven Linsen 1, 2 besteht. Trotz der Verwendung von nur zwei Linsen 1, 2 sind optische Abbildungsfehler insbesondere dadurch vermindert, dass mindestens eine der Linsen 1, 2 mindestens eine asphärische Linsenfläche 11 aufweist. Bei dem Ausführungsbeispiel der Figur 1 ist die der Blendenöffnung 6 zugewandte Linsenfläche der ersten refraktiven Linse 1 eine asphärische Linsenfläche 11. Bei anderen Ausgestaltungen des optischen Linsensystems 12 kann alternativ oder zusätzlich mindestens eine der anderen Linsenflächen als asphärische Linsenfläche ausgebildet sein.

In erster Näherung kann man das optische Linsensystem 12 als aus zwei dünnen Linsen zusammengesetzt beschreiben. Dann ergibt sich die chromatische Längsaufspaltung (Messbereich MR) mit gemittelten Randstrahlhöhen $y_1$ und $y_2$ an den beiden Linsen 1, 2 mit Brennweiten $f_1$, $f_2$ und den Abbezahlen $v_1$, $v_2$ als

$$MR = \frac{1}{NA_{MR}} \cdot \left( \frac{y_1^2}{v_1 f_1} + \frac{y_2^2}{v_2 f_2} \right).$$

Es hat sich als vorteilhaft herausgestellt, eine Linsenfläche derjenigen der beiden Linsen 1, 2 des optischen Linsensystems 12 asphärisch auszubilden, welche die kürzere Brennweite aufweist. Auf diese Weise wird eine geringe Toleranzempfindlichkeit erzielt. Weiterhin ist es vorteilhaft, wenn bei Linsen 1, 2 mit verschiedenen Brennweiten $f_1$, $f_2$ und verschiedenen Abbezahlen $v_1$, $v_2$ die Linse mit der kürzeren Brennweite die geringere Abbezahl aufweist, insbesondere eine Abbezahl zwischen 20 und 30.

Zur Erzielung einer möglichst kurzen Baulänge kann mindestens eine der Linsen 1, 2 als Meniskuslinse ausgebildet sein. Vorzugsweise ist in diesem Fall die erste Linse 1 zur Blendenöffnung 6 hin konkav oder die zweite Linse 2 zum Messraum hin konkav ausgebildet.

Bei einer weiteren vorteilhaften Ausgestaltung weist die zweite Linse 2 die asphärische Linsenfläche 11 und eine kleinere Brennweite als die erste Linse auf. Insbesondere kann das Verhältnis der Brennweiten in etwa dem Verhältnis der numerischen Apertur $NA_{PH}$ auf der Seite der Blendenöffnung zur numerischen Apertur $NA_{MR}$ auf der Seite des Messraums entsprechen.

Die asphärische Linsenfläche 11 weist vorzugsweise ein radialsymmetrisches Höhenprofil h(r) auf, das beispielsweise durch die folgende Gleichung darstellbar ist:

$$h(r) = \frac{r^2}{R\left(1 + \sqrt{1 - (1+k)\frac{r^2}{R^2}}\right)} + \sum_{i=1}^{n} A_{2i} r^{2i}$$

Dabei sind h (r) eine Höhenkoordinate als Funktion des radialen Abstandes r senkrecht zur optischen Achse, R der Scheitelradius, k die konische Konstante und $A_{2i}$ die asphärischen Parameter.

Die Design der asphärischen Linsenfläche 11, d.h. die Bestimmung der Parameter der Gleichung, erfolgt vorzugsweise durch eine Simulationsrechnung, welche das gesamte optische System einbezieht.

Die Verwendung von nur zwei Linsen 1, 2 in dem Messkopf 5 hat insbesondere den Vorteil, dass der Messkopf 5 sich durch vergleichsweise geringe Abmessungen und ein geringes Gewicht auszeichnet. Um trotz der Verwendung von nur zwei Linsen 1,2 mit dem optischen Linsensystem 12 eine möglichst große chromatische Aberration zu erzielen, ist zumindest eine der Linsen 1, 2 aus einem optischen Material gebildet, das eine Abbe-Zahl $v_d$ zwischen 20 und 41 aufweist. Ein optisches Material mit einer derart geringen Abbe-Zahl $v_d$ zeichnet sich durch eine starke optische Dispersion aus, d. h. die Brechzahl weist eine starke Abhängigkeit von der Wellenlänge auf. Besonders bevorzugt sind beide Linsen 1, 2 des optischen Linsensystems 12 aus stark dispersiven optischen Materialien mit Abbe-Zahlen $v_d$ zwischen 20 und 41 ausgebildet. Solche optischen Materialien sind insbesondere Schwerflint-Gläser. Geeignete Gläser sind beispielsweise unter den Bezeichnungen SF66 ($v_d$ = 20,88), LaSF35 ($v_d$ = 29,06), N-LaSF43 ($v_d$ = 40,61) und BaSF13 ($v_d$ = 38,57) der Firma Schott erhältlich.

Das optische Linsensystem 12 weist bei der Vorrichtung 10 eine derartige chromatische Längsaberration auf, dass zwischen den Wellenlängen 450 nm und 700 nm eine axiale Fokusverschiebung, die einen Messbereich MR definiert, zwischen 0,2 mm und 10 mm auftritt.

Das optische Linsensystem 12 weist auf der Seite der Blendenöffnung 6 eine numerische Apertur $NA_{PH}$ = n sin $\alpha_{PH}$ auf. Dabei ist der Winkel $\alpha_{PH}$ ein Winkel zwischen der optischen Achse 30 und einem Randstrahl 31 des Lichtbündels, das ausgehend von der Blendenöffnung 6 auf das optische Linsensystem 12 trifft. Eine weitere charakteristische Größe des optischen Linsensystems 12 ist die numerische Apertur $NA_{MR}$ = n sin $\alpha_{MR}$ auf der Seite des Messbereichs MR. Dabei ist der Winkel $\alpha_{MR}$ der Winkel zwischen der optischen Achse 30 und einem Randstrahl 32 des Lichtbündels, das ausgehend vom Messbereich auf das optische Linsensystem 12 trifft. Der Brechungsindex n ist typischerweise der Brechungsindex von Luft und somit ungefähr gleich 1.

Bei der Vorrichtung sind vorteilhaft die folgenden Bedingungen gleichzeitig erfüllt:

$$(1) \quad 100 \ \mu m \ \leq \ MR \ * \ NA^2_{MR} \ \leq \ 450 \ \mu m$$

$$(2) \quad 1,0 \ \mu m \ \leq \ r_{PH} \ * \ NA_{PH} \ \leq \ 5,5 \ \mu m$$

Es hat sich insbesondere in umfangreichen Fallstudien herausgestellt, dass in diesen Wertebereichen eine hohe Auflösung erzielt werden kann. Aus der Theorie der konfokalen Abbildung kann abgeleitet werden, dass bei gegebenem Messbereich MR eine hohe Auflösung des Messkopfes, die sich in einer möglichst geringen spektralen Peakbreite des Messsignals äußert, nur erreicht werden kann, wenn eine bestimmte numerische Apertur $NA_{MR}$ im Messraum nicht unterschritten wird. Die Bedingung (1) gibt einen besonders bevorzugten Bereich für das Produkt MR $* NA^2_{MR}$ an. Die Peakbreite des Messsignals ist allerdings auch abhängig vom Strahlparameterprodukt $r_{PH} * NA_{PH}$. Für diese Größe gibt die Bedingung (2) einen besonders bevorzugten Bereich an.

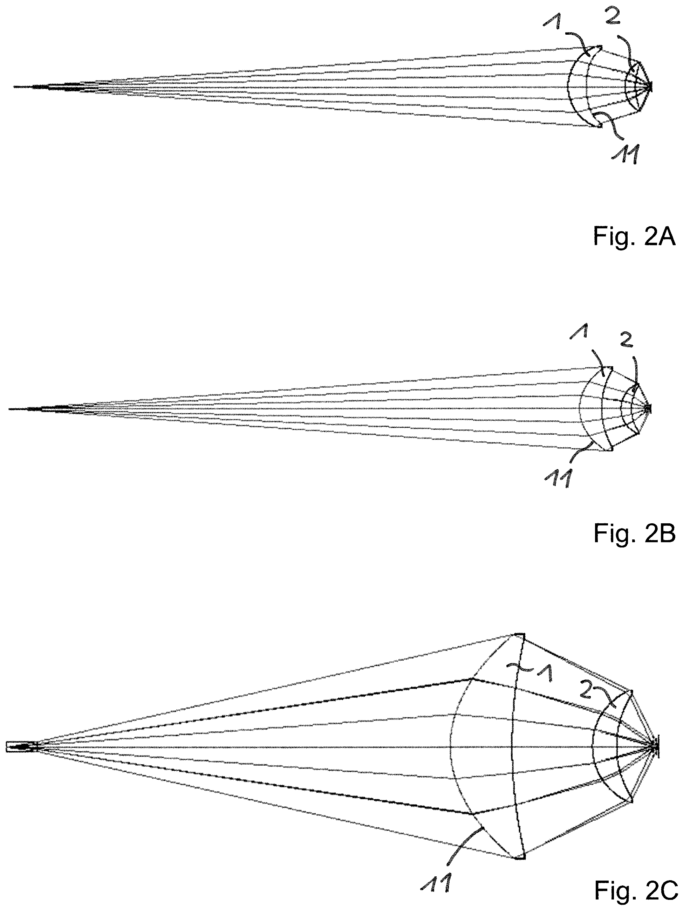

In den folgenden Figuren 2A bis 2J sind Ausführungsbeispiele für optische Linsensysteme dargestellt, welche die genannten Bedingungen (1) und (2) gleichzeitig erfüllen. Die optischen Linsensysteme weisen insbesondere eine derart gute Korrektur optischer Abbildungsfehler auf, dass die Peakbreiten des Messsignals im Wesentlichen nur durch nicht vermeidbare Beugungseffekte an der Blendenöffnung bedingt sind. Mit anderen Worten wird eine beugungsbegrenzte Abbildung erzielt. Die asphärische Linsenfläche ist jeweils durch das Bezugszeichen 11 gekennzeichnet.

Die optischen Linsensysteme sind insbesondere durch folgende Kenngrößen gekennzeichnet:

$f_1$: Teilbrennweite der ersten Linse
$f_2$: Teilbrennweite der zweiten Linse
$\nu_{d1}$: Abbe-Zahl der ersten Linse
$\nu_{d2}$: Abbe-Zahl der zweiten Linse
L: Baulänge des Messkopfs
d: Durchmesser des Messkopfs

Die Ausführungsbeispiele der Figuren 2A bis 2C weisen jeweils einen Messbereich MR = 0,25 mm auf.

Bei dem Ausführungsbeispiel der Fig. 2A ist $NA_{MR}$ = 0,91, MR* $NA^2_{MR}$ = 210 $\mu$m, $NA_{PH}$ = 0,07, $r_{PH}$ = 14 $\mu$m, $r_{PH} * NA_{PH}$ = 1 $\mu$m, $f_1$ = 12,7 mm, $f_2$ = 6,0 mm, $\nu_{d1}$ = 28,4, $\nu_{d2}$ = 29,1, L = 89,1 mm und D = 11,6 mm.

Bei dem Ausführungsbeispiel der Fig. 2B ist $NA_{MR}$ = 0,91, MR* $NA^2_{MR}$ = 210 $\mu$m, $NA_{PH}$ = 0,07, $r_{PH}$ = 14 $\mu$m, $r_{PH} * NA_{PH}$ = 1 $\mu$m, $f_1$ = 11,3 mm, $f_2$ = 7,6 mm, $\nu_{d1}$ = 28,4, $\nu_{d2}$ = 29,1, L = 85,3 mm und D = 11,4 mm.

Bei dem Ausführungsbeispiel der Fig. 2C ist $NA_{MR}$ = 0,91, MR* $NA^2_{MR}$ = 210 $\mu$m, $NA_{PH}$ = 0,22, $r_{PH}$ = 2 5 $\mu$m, $r_{PH} * NA_{PH}$ = 5,5 $\mu$m, $f_1$ = 7,5 mm, $f_2$ = 5,8 mm, $\nu_{d1}$ = 28,4, $\nu_{d2}$ = 29,1, L = 30,0 mm und D = 11,0 mm.

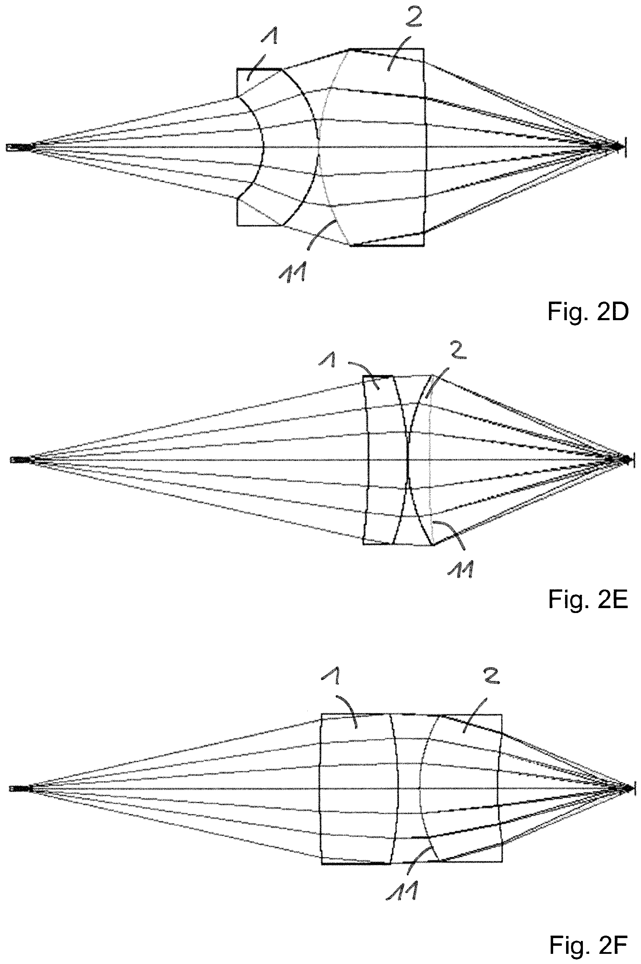

Die Ausführungsbeispiele der Figuren 2D bis 2G weisen jeweils einen Messbereich von etwa MR = 1,5 mm auf.

Bei dem Ausführungsbeispiel der Fig. 2D ist $NA_{MR}$ = 0,40, MR* $NA^2_{MR}$ = 240 um, $NA_{PH}$ = 0,22, $r_{PH}$ = 13 $\mu$m, $r_{PH} * NA_{PH}$ = 2,9 $\mu$m, $f_1$ = -39 mm, $f_2$ = 9,6 mm, $\nu_{d1}$ = 28,4, $\nu_{d2}$ = 29,1, L = 41,5 mm und D = 14,0 mm.

Bei dem Ausführungsbeispiel der Fig. 2E ist $NA_{MR}$ = 0,40, MR* $NA^2_{MR}$ = 240 $\mu$m, $NA_{PH}$ = 0,22, $r_{PH}$ = 13 $\mu$m, $r_{PH} * NA_{PH}$ = 2,9 $\mu$m, $f_1$ = 44,4 mm, $f_2$ = 17,0 mm, $\nu_{d1}$ = 28,4, $\nu_{d2}$ = 29,1, L = 54 mm und D = 15,5 mm.

Bei dem Ausführungsbeispiel der Fig. 2F ist $NA_{MR}$ = 0,40, MR* $NA^2_{MR}$ = 240 $\mu$m, $NA_{PH}$ = 0,22, $r_{PH}$ = 13 $\mu$m, $r_{PH} * NA_{PH}$ = 2,9 $\mu$m, $f_1$ = 30,0 mm, $f_2$ = 18,8 mm, $\nu_{d1}$ = 20,0, $\nu_{d2}$ = 29,1, L = 57,9 mm und D = 14,4 mm.

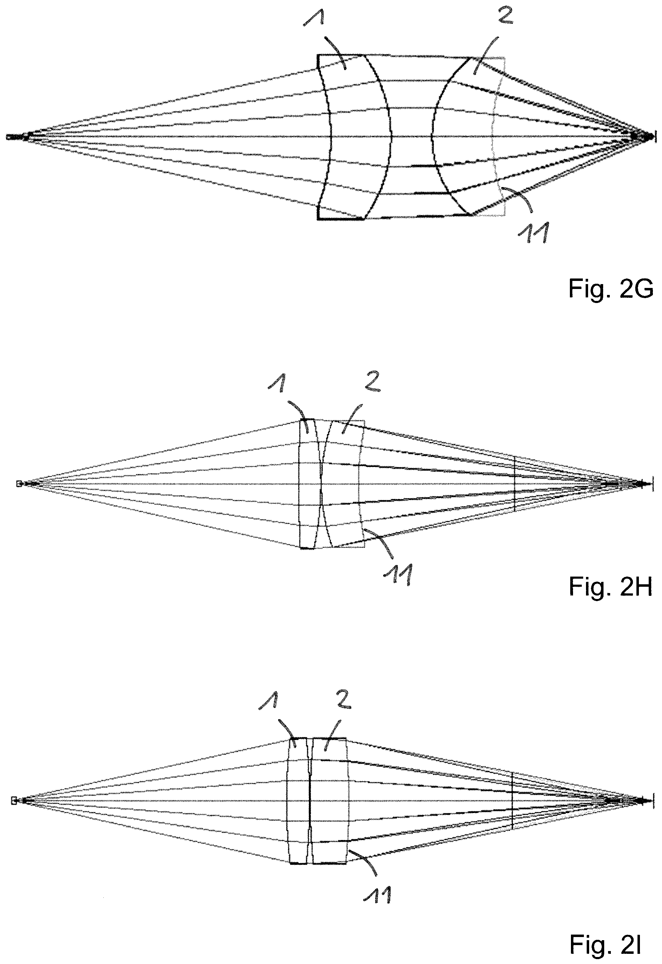

Bei dem Ausführungsbeispiel der Fig. 2G ist $NA_{MR}$ = 0,40, MR* $NA^2_{MR}$ = 240 $\mu$m, $NA_{PH}$ = 0,22, $r_{PH}$ = 13 $\mu$m, $r_{PH} * NA_{PH}$ = 2,9 $\mu$m, $f_1$ = 50,9 mm, $f_2$ = 25,8 mm, $\nu_{d1}$ = 40,6, $\nu_{d2}$ = 38,6, L = 79,0 mm und D = 21,0 mm.

Die Ausführungsbeispiele der Figuren 2H und 2I weisen jeweils einen Messbereich MR = 10 mm auf.

Bei dem Ausführungsbeispiel der Fig. 2H ist $NA_{MR}$ = 0,205, MR* $NA^2_{MR}$ = 420 $\mu$m, $NA_{PH}$ = 0,22, $r_{PH}$ = 13 $\mu$m, $r_{PH} * NA_{PH}$ = 2,9 $\mu$m, $f_1$ = 78,5 mm, $f_2$ = 130 mm, $\nu_{d1}$ = 29,1, $\nu_{d2}$ = 29,1, L = 199 mm und D = 41,8 mm.

Bei dem Ausführungsbeispiel der Fig. 2I ist $NA_{MR}$ = 0,205, MR* $NA^2_{MR}$ = 420 $\mu$m, $NA_{PH}$ = 0,22, $r_{PH}$ = 13 $\mu$m, $r_{PH} * NA_{PH}$ = 2,9 $\mu$m, $f_1$ = 87,0 mm, $f_2$ = 91,4 mm, $\nu_{d1}$ = 29,1, $\nu_{d2}$ = 29,1, L = 193 mm und D = 39,0 mm.

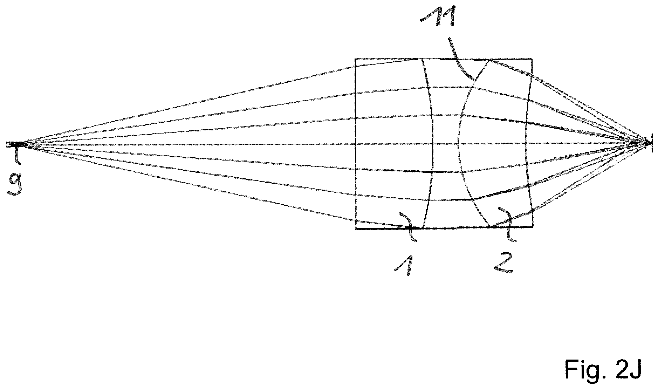

In Figur 2J ist ein weiteres Ausführungsbeispiel dargestellt, anhand dessen die Ausgestaltung des optischen Systems, insbesondere der refraktiven Linsen 1, 2 und der asphärischen Linsenfläche 11 im Detail erläutert wird. Das Linsensystem ist für einen Messbereich MR = 1,5 mm berechnet worden. Bei dem Ausführungsbeispiel ist $NA_{MR}$ = 0,51, $NA_{PH}$ = 0,22, MR* $NA^2_{MR}$ = 390 $\mu$m, L = 60,5 mm und D = 16,6 mm.

Auf die Blendenöffnung folgt ein Abstandselement 9 aus beidseitig planem Glas vom Typ BK7 mit einer Dicke von 1,5 mm. Darauf folgt nach einem Luftabstand von 31,6395 mm die erste Linse 1, die als sphärische Plankonvexlinse aus Glas vom Typ SF66 ($\nu_{d1}$ = 21) ausgebildet ist. Die der Blendenöffnung zugewandte Seite der Linse 1 ist plan. Durch die Verwendung mindestens einer planen Linsenfläche werden vorteilhaft der Herstellungsaufwand und die Toleranzempfindlichkeit vermindert. Die gegenüberliegende sphärisch konvexe Fläche weist einen Krümmungsradius 33,6943 mm auf. Die Mittendicke der Linse 1 beträgt 7,500 mm.

Auf die erste Linse 1 folgt nach einem Luftabstand von 2,418 mm die zweite Linse 2, die als asphärische Meniskuslinse aus Glas vom Typ SF66 ($v_{d2}$ = 21) ausgebildet ist. Die der ersten Linse 1 zugewandte Linsenfläche ist eine asphärische Linsenfläche 11, die in Bezug auf die zuvor angegebene Formel ein radialsymmetrisches Höhenprofil h(r) mit einem Scheitelradius R = 11,36687 mm, einer konischen Konstante k = -0,224302 sowie asphärischen Parametern $A_2$ = -2,260*$10^{-8}$, $A_4$ = -1,384*$10^{-5}$, $A_6$ = -7,777*$10^{-8}$, $A_8$ = -3,609*$10^{-10}$, $A_{10}$ = -1,365*$10^{-12}$ und $A_{12}$ = - 2,501*$10^{-14}$ aufweist. Die Mittendicke der Linse 2 beträgt 5,0889 mm. Die dem Messbereich zugewandte Linsenfläche der zweiten Linse ist sphärisch konkav mit einem Krümmungsradius 38,0431 mm.

Ausgehend von der zweiten Linse 2 liegt der Fokus für die Wellenlänge $\lambda$ = 450 nm in einem Luftabstand von 11,541 mm, für die Wellenlänge $\lambda$ = 546 nm in einem Luftabstand von 12,395 mm und für die Wellenlänge $\lambda$ = 675 nm in einem Luftabstand von 12,991 mm.

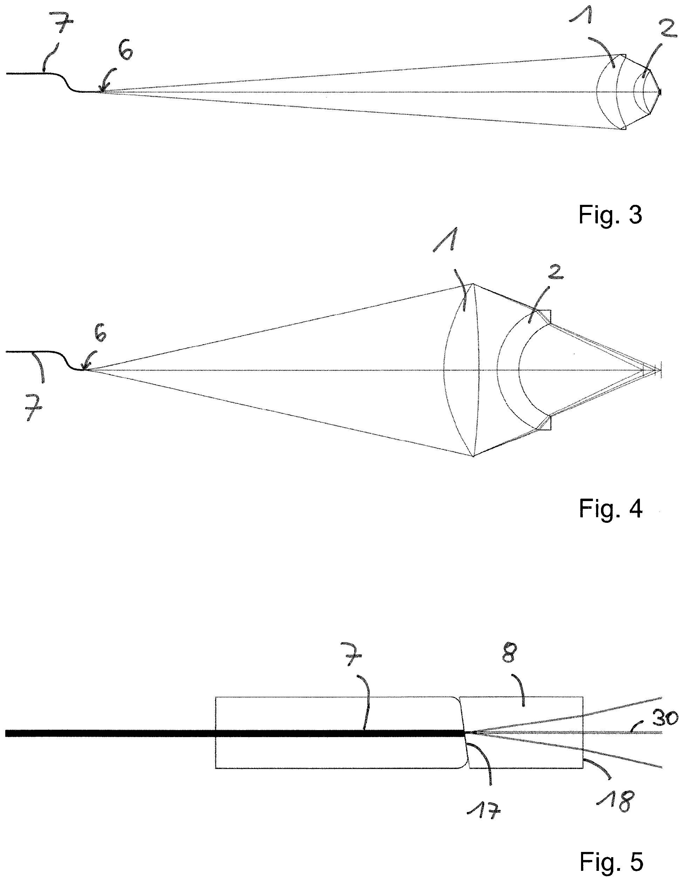

Für die Anwendung des Messprinzips ist es günstig, den optischen Messkopf räumlich von einer Auswerteeinheit, welche die polychromatische Lichtquelle und die Lichtanalyseeinheit aufweist, durch eine flexible Lichtleitfaser 7 räumlich zu trennen, wie es in Fig. 3 dargestellt ist. Dadurch nimmt der Messkopf wenig Platz ein, besitzt ein geringes Gewicht und kann auch unter kritischen Bedingungen, wie im Vakuum oder in Umgebungen mit starken elektromagnetischen Störeinflüssen, eingesetzt werden. Die Stirnfläche der Lichtleitfaser 7 dient bei dieser Ausgestaltung als Blendenöffnung 6 des Messkopfs und stellt so die Lichtaus- und -eintrittsapertur dar. Vorzugsweise wird als Lichtleiterfaser 7 eine Faser mit einem Kerndurchmesser zwischen 9 $\mu$m und 50 $\mu$m und einer numerischen Apertur zwischen 0,07 und 0,22 verwendet.

Je geringer das Strahlparameterprodukt $r_{PH}$ * $NA_{PH}$ aus dem Radius $r_{PH}$ der Lichtleitfaser und der numerischen Apertur $NA_{PH}$ auf der Seite der Lichtleitfaser 7 ist, um so konfokaler ist die Abbildung des Messkopfs 5 und umso hochauflösender können Abstände detektiert werden. Für kurze Abtastraten ist es allerdings günstig, möglichst viel Licht der Lichtquelle in die Lichtleitfaser 7 einkoppeln zu können, so dass ein größeres Strahlparameterprodukt $r_{PH}$ * $NA_{PH}$ von Vorteil ist. In diesem Fall kann insbesondere eine Multimodefaser, beispielsweise eine Gradientenindexfaser mit 50 $\mu$m Durchmesser mit $NA_{PH}$ = 0,22 verwendet werden. Das relativ hohe Strahlparameterprodukt $r_{PH}$ * $NA_{PH}$ der Lichtleitfaser 7 kann gegebenenfalls durch eine Reduzierung der effektiven numerischen Apertur $NA_{PH}$ durch eine Beblendung im Messkopf, vorzugsweise über die Linsendurchmesser, auf Werte von bis zu 0,07 deutlich verringert werden. Bei dem Ausführungsbeispiel der Fig. 3 ist $NA_{PH}$ = 0,07 und $NA_{MR}$ = 0,90, wobei zwischen den Wellenlängen 450 nm und 675 nm eine Fokusverschiebung von 0,25 mm auftritt.

Eine kürzere Bauform kann durch eine größere (effektive) numerische Apertur $NA_{PH}$ auf der Seite der Lichtleitfaser 7 erreicht werden, wobei das Strahlparameterprodukt $r_{PH}$ * $NA_{PH}$ durch den Radius $r_{PH}$ der Lichtleitfaser 7 angepasst werden kann. In Fig. 4 ist ein Ausführungsbeispiel des optischen Messkopfs dargestellt, bei dem die effektive numerische Apertur auf der Seite der Lichtleitfaser 7 $NA_{PH}$ = 0,22 und die numerische Apertur auf der Seite des Messbereichs $NA_{MR}$ = 0,4 betragen. Bei diesem Ausführungsbeispiel wird eine chromatische Fokusverschiebung von 1,5 mm im Wellenlängenbereich zwischen 450 und 675 nm erzielt.

Viele Messobjekte, wie Flüssigkeiten, transparente Medien (Gläser, Kunststoffe) oder entspiegelte optische Flächen, weisen eine geringe Reflektivität für das Messlicht auf, so dass es wesentlich ist, intrinsische Rückreflexe im Messsystem so stark wie möglich zu unterdrücken. Bei dem Ausführungsbeispiel der Figur 5 wird hierzu ein optisches Fenster 8 verwendet, dessen Brechzahl vorteilhaft an eine Brechzahl der Lichtleitfaser 7 angepasst ist. Das optische Fenster 8 ist an einer Faserendfläche 17 der Lichtleitfaser 7 angebracht, zum Beispiel durch Verkittung oder Aufeinanderpressen wie bei optischen Faserkupplungen. Damit werden die Rückreflexe (Fresnel-Reflexion) an der Faserendfläche 17 vermindert. Die dem optischen Linsensystem zugewandte Endfläche 18 des optischen Fensters 8 kann mit einer reflexionsmindernden Beschichtung (nicht dargestellt) versehen sein, wenn auch ihr Einfluss aufgrund des Abstandes zur Faserendfläche 17 deutlich geringer ist. Wenn eine besonders starke Unterdrückung von Rückreflexen erzielt werden soll, oder eine Anfälligkeit bei Verschmutzungen im Fall von lösbaren Fasersteckverbindungen vermieden werden soll, ist es vorteilhaft, die Faserendfläche 17 und eine der Faserendfläche zugewandte Oberfläche des optischen Elements 8 schräg zur optischen Achse 30 auszubilden, wie es in Figur 5 dargestellt ist. Dies erfolgt vorzugsweise durch eine Schrägpolitur der Endflächen.

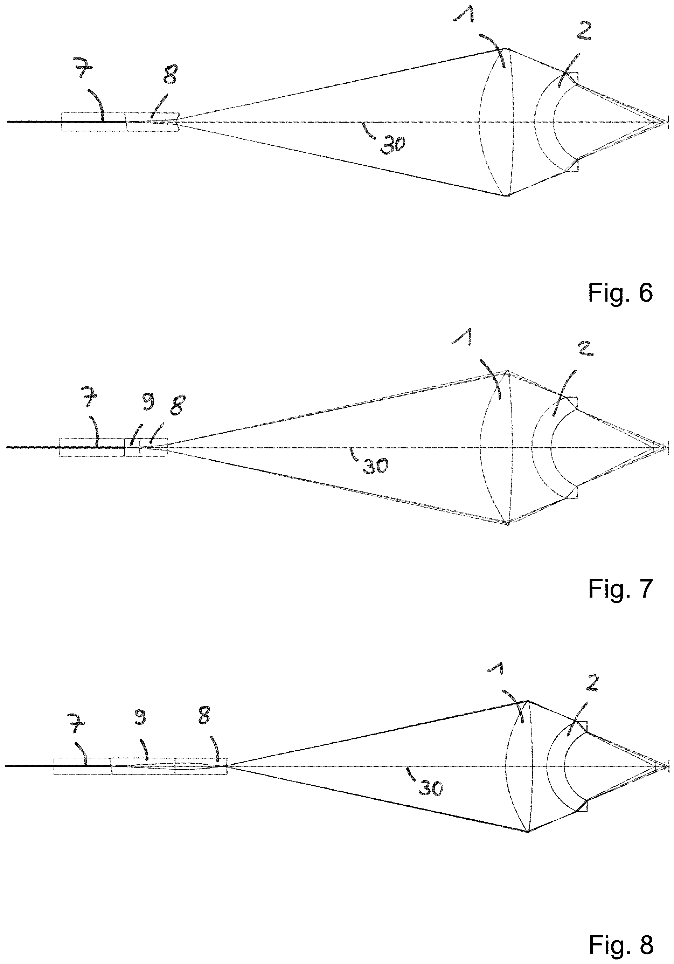

Figur 6 zeigt ein Ausführungsbeispiel, bei dem die Divergenz eines aus der Lichtleifaser 7 mit numerischer Apertur von 0,07 austretenden Lichtbündels vorteilhaft mit einer refraktiven Zerstreuungslinse 8 auf einen Wert $NA_{PH}$ = 0,22 vergrö-ßert wird. Durch die Vergrößerung der numerischen Apertur $NA_{PH}$ mittels des Zerstreuungslinse 8 wird eine wesentlich kürzere Bauform des Messkopfes erzielt. Insbesondere ist es auf diese Weise möglich, den Abstand zwischen der Lichtleitfaser 7 und dem optischen Linsensystem im Messkopf auf ca. 1/3 zu reduzieren. Durch die faserseitige Schrägpolitur der Zerstreuungslinse 8, die in diesem Beispiel in direkten Kontakt mit der Lichtleitfaser 7 gebracht wird, werden gleichzeitig die Rückreflexe der Faserstirnfläche 17 minimiert.

Figur 7 zeigt ein weiteres Ausführungsbeispiel, bei dem die Divergenz eines aus der Lichtleifaser 7 austretenden Lichtbündels vorteilhaft mittels eines optischen Elements 8 vergrößert wird. Anstelle einer refraktiven Zerstreuungslinse wird bei dem Ausführungsbeispiel der Figur 7 eine Gradientenindex-Zerstreuungslinse 8 als optisches Element eingesetzt. Die Gradientenindex-Zerstreuungslinse 8 weist ein radiales, vorzugsweise nahezu parabolisches, Brechzahlprofil mit minimaler Brechzahl auf der optischen Achse 30 auf. Die Gradientenindex-Linse 8 hat im Vergleich zu einer refraktiven Linse den Vorteil, dass sie mit ihren planaren optischen Flächen kosteneffizient in großen Stückzahlen hergestellt werden kann.

Beim Ausführungsbeispiel der Figur 7 befindet sich zwischen der Lichtleitfaser 7 und der Gradientenindex-Zerstreuungslinse 8 vorteilhaft ein Abstandselement 9, um Rückreflexe zwischen der Faser 7 und der Gradientenindexlinse 8, die eine höhere Brechzahl als die Lichtleitfaser 7 aufweisen kann, zu minimieren.

Figur 8 zeigt ein weiteres Ausführungsbeispiel, bei dem die Divergenz eines aus der Lichtleifaser 7 austretenden Lichtbündels vorteilhaft mittels eines optischen Elements in Form einer Gradientenindex-Linse 8 vergrößert wird. Anders als bei dem vorherigen Ausführungsbeispiel ist die Gradientenindex-Linse 8 eine Sammellinse. Die Gradientenindex-Sammellinse 8 weist ein radiales, vorzugsweise nahezu parabolisches, Brechzahlprofil mit maximaler Brechzahl auf der optischen Achse 30 auf. Sie kann wie die zuvor beschriebene Gradientenindex-Zerstreuungslinse mit ihren planaren optischen Flächen kosteneffizient in großen Stückzahlen hergestellt werden. Wie bei dem vorherigen Ausführungsbeispiel befindet sich zwischen der Lichtleitfaser 7 und der Gradientenindex-Sammellinse 8 ein Abstandselement 9, um Rückreflexe zwischen der Lichtleitfaser 7 und der Gradientenindex-Sammellinse 8 mit höherer Brechzahl zu minimieren.

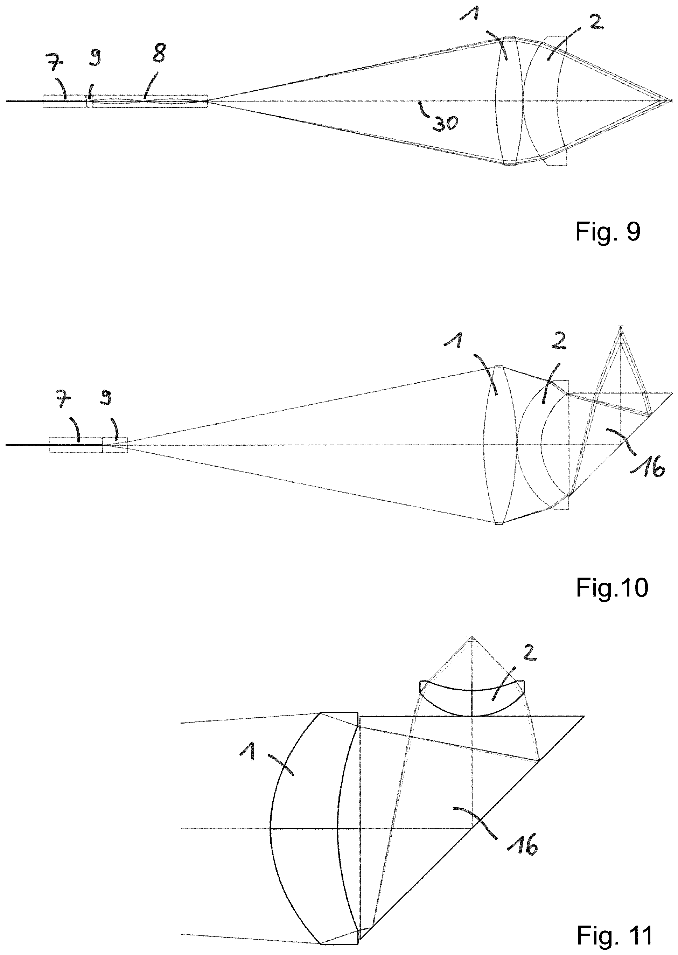

Figur 9 zeigt ein weiteres Ausführungsbeispiel, bei dem die Divergenz eines aus der Lichtleifaser 7 austretenden Lichtbündels vorteilhaft mittels eines optischen Elements in Form einer Gradientenindex-Linse 8 vergrößert wird. Bei diesem Ausführungsbeispiel ist die Gradientenindex-Linse 8 wie bei dem vorherigen Ausführungsbeispiel eine Gradientenindex-Sammellinse, die ein radiales, vorzugsweise nahezu parabolisches, Brechzahlprofil mit maximaler Brechzahl auf der optischen Achse 30 aufweist. Ein solches radiales Brechzahlprofil mit nahezu parabolischer Form erzeugt einen kontinuierlichen, kosinusförmigen Strahlverlauf innerhalb der Gradientenindex-Sammellinse 8, dessen Periode die Pitchlänge ist. Bei dem Ausführungsbeispiel der Figur 9 ist die Länge der Gradientenindex-Sammellinse 8 in etwa gleich der Pitchlänge, so dass die Gradientenindex-Sammellinse die Lichteintrittsfläche in zwei Zwischenbilder abbildet. Diese Ausgestaltung macht sich die Abhängigkeit der Pitchlänge einer Gradientenindex-Linse von der Wellenlänge zunutze. Dadurch, dass die Pitchlänge mit wachsender Wellenlänge steigt, weisen bereits die Zwischenbilder chromatische Verschiebung auf, d.h. sie sind auf der optischen Achse etwas gegeneinander verschoben. Auf diese Weise wird die gesamte chromatische Aberration des Messkopfs verstärkt und der Messbereich vorteilhaft vergrößert. Dies ist insbesondere für Anwendungen vorteilhaft, bei denen der Messkopf besonders geringe Abmessungen aufweisen soll. Bei dem Ausführungsbeispiel der Fig. 9 ist der Messbereich um etwa 20% größer als ein Messbereich, der sich allein durch die chromatische Aberration des optischen Linsensystems ergeben würde.

Figur 10 zeigt ein Ausführungsbeispiel, bei dem in dem Messkopf ein Prisma als Strahlumlenkungselement 16 angeordnet ist. Auf diese Weise wird das Lichtbündel seitlich, vorzugsweise um einen Winkel von 90°, zum Messbereich hin abgelenkt. Dies ist insbesondere für die Vermessung von Hohlräumen und Objekten in flachen Zwischenräumen vorteilhaft. Anstelle eines Prismas kann zum Beispiel auch ein Spiegel als Strahlumlenkelement 16 verwendet werden. Wenn zur Strahlumlenkung ein Umlenkprisma verwendet wird, wird vorzugsweise eine durch den optischen Glasweg des Prismas 16 induzierte sphärische Aberration durch Anpassung der Radien und der asphärischen Linsenfläche des optischen Linsensystems kompensiert.

Die Strahlumlenkung erfolgt bei dem Ausführungsbeispiel der Figur 10 zwischen dem Messbereich und der dem Messbereich zugewandten zweiten refraktiven Linse 2 des optischen Linsensystems. Auf diese Weise kann eine besonders geringe seitliche Ausdehnung des Messkopfes erreicht werden. Die Anordnung des Strahlumlenkelements 16 zwischen dem Messobjekt und dem optischen Linsensystem ist aufgrund des dafür notwendigen optischen Weges nur zweckmäßig, wenn die numerische Aperturen $NA_{MR}$ auf der Seite des Messbereichs nicht größer als etwa 0,57 ist. Die numerische Apertur im Messraum beträgt bei dem Ausführungsbeispiel der Figur 10 zum Beispiel $NA_{MR} = 0,40$.

Alternativ ist es aber auch möglich, dass die Strahlumlenkung zwischen den beiden Linsen 1, 2, oder zwischen der Lichtquelle und dem optischen Linsensystem erfolgt. Dies ist insbesondere dann sinnvoll, wenn der Messbereich vergleichsweise klein ist, und die eine höhere numerische Apertur $NA_{MR}$ im Messbereich verwendet wird. Die Figur 11 zeigt ein Ausführungsbeispiel, bei dem das Strahlumlenkelement 16, das beispielsweise ein 90°-Umlenkprisma ist, zwischen der ersten Linse 1 und der zweiten Linse 2 des optischen Linsensystems angeordnet ist. Die numerische Apertur $NA_{MR}$ im Messraum beträgt bei diesem Ausführungsbeispiel $NA_{MR} = 0,7$.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

**Patentansprüche**

1. Vorrichtung zur berührungslosen optischen Abstandsmessung, umfassend eine Lichtquelle (3), eine Lichtanalyseeinheit (4) und einen Messkopf (5),
   wobei

   - die Lichtquelle (3) eine polychromatische Lichtquelle ist, die zur Aussendung von Licht (13) eines kontinuierlichen Spektrums in den Messkopf (5) geeignet ist, die Lichtanalyseeinheit (4) zum Empfang und zur spektralen Analyse von aus dem Messkopf (5) empfangenen Licht (14) geeignet ist,
   - der Messkopf (5) eine Blendenöffnung (6) für den Eintritt des Lichts (13) der Lichtquelle (3) in den Messkopf (5) und für den Austritt des empfangenen Lichts (14) aus dem Messkopf (5) in Richtung zur Lichtanalyseeinheit (4) aufweist,
   - der Messkopf (5) ein optisches Linsensystem (12) aufweist, welches eine chromatische Längsaberration aufweist,
   - das optische Linsensystem (12) nur aus einer ersten refraktiven Linse (1) und einer zweiten refraktiven (2) Linse besteht,
   - mindestens eine der refraktiven Linsen (1, 2) mindestens eine asphärisch gekrümmte Linsenfläche (11) aufweist,
   - sowohl die erste refraktive Linse (1) als auch die zweite refraktive Linse (2) ein optisches Material mit einer Abbe-Zahl $20 \leq \nu_d \leq 41$ aufweisen,
   - das optische Linsensystem (12) eine derartige chromatische Längsaberration aufweist, dass ein Messbereich (MR), der gleich einer axialen Fokusverschiebung des optischen Linsensystems (12) zwischen den Wellenlängen 450 nm und 700 nm ist, zwischen einschließlich 0,2 mm und einschließlich 10 mm beträgt, und
   - ein Produkt aus dem Messbereich (MR) und dem Quadrat der numerischen Apertur ($NA^2_{MR}$) auf der Seite des Messbereichs (MR) zwischen einschließlich 100 $\mu$m und einschließlich 450 $\mu$m beträgt.

2. Vorrichtung nach Anspruch 1,
   wobei ein Produkt aus dem Radius ($r_{PH}$) der Blendenöffnung und der numerischen Apertur ($NA_{PH}$) auf der Seite der Blendenöffnung (6) zwischen einschließlich 1,0 $\mu$m und einschließlich 5,5 $\mu$m beträgt.

3. Vorrichtung nach einem der vorhergehenden Ansprüche, wobei die Lichtquelle (3) und die Lichtanalyseeinheit (4) mittels einer Lichtleitfaser (7) mit dem Messkopf (5) verbunden sind.

4. Vorrichtung nach Anspruch 3,
   wobei die Blendenöffnung (6) des Messkopfs (5) durch eine Faserendfläche (17) der Lichtleitfaser (7) gebildet ist.

5. Vorrichtung nach Anspruch 3 oder 4,
   wobei an einer dem optischen Linsensystem (12) zugewandten Faserendfläche (17) ein optisches Element (8) angeordnet ist.

6. Vorrichtung nach Anspruch 5,
   wobei das optische Element (8) ein optisches Fenster ist.

7. Vorrichtung nach Anspruch 5,
   wobei das optische Element (8) eine refraktive Zerstreuungslinse ist.

8. Vorrichtung nach Anspruch 5,
   wobei das optische Element (8) eine Gradientenindex-Zerstreuungslinse ist.

9. Vorrichtung nach Anspruch 5,
   wobei das optische Element (8) eine Gradientenindex-Sammellinse ist.

10. Vorrichtung nach Anspruch 5,
    wobei das optische Element (8) eine Gradientenindex-Linse ist, welche einen durch die Faserendfläche (17) gebildeten Lichtfleck der Lichtquelle (3) in ein oder mehrere Zwischenbilder abbildet.

11. Vorrichtung nach einem der Ansprüche 5 bis 10,
    wobei zwischen der Faserendfläche (17) und dem optischen Element (8) ein Abstandselement (9) angeordnet ist.

**12.** Vorrichtung nach einem der Ansprüche 5 bis 11,
wobei die Faserendfläche (17) und eine der Faserendfläche (17) zugewandte Oberfläche des optischen Elements (8) oder des Abstandselements (9) schräg zu einer optischen Achse (30) ausgebildet sind.

**13.** Vorrichtung nach einem der vorhergehenden Ansprüche,
wobei in dem Messkopf (5) ein Strahlumlenkelement (16) angeordnet ist.

**Claims**

**1.** Device for contactless optical distance measurement, comprising a light source (3), a light analysis unit (4) and a measurement head (5), wherein

- the light source (3) is a polychromatic light source, which is suitable for emitting light (13) of a continuous spectrum into the measurement head (5),
- the light analysis unit (4) is suitable for receiving and for spectrally analyzing received light (14) from the measurement head (5),
- the measurement head (5) has an aperture opening (6) for the entry of the light (13) of the light source (3) into the measurement head (5) and for the exit of the received light (14) from the measurement head (5) towards the light analysis unit (4),
- the measurement head (5) has an optical lens system (12), which has a chromatic longitudinal aberration,
- the optical lens system (12) only consists of a first refractive lens (1) and a second refractive (2) lens,
- at least one of the refractive lenses (1, 2) has at least one aspherically curved lens surface (11),
- both the first refractive lens (1) and the second refractive lens (2) have an optical material with an Abbe number $20 \leq v_d \leq 41$, and
- the optical lens system (12) has such a chromatic longitudinal aberration that a measurement region (MR), which equals an axial focus shift of the optical lens system (12) between the wavelengths 450 nm and 700 nm, is between 0.2 mm inclusively and 10 mm inclusively, and
- a product of the measurement region (MR) and the square of the numerical aperture ($NA^2_{MR}$) on the side of the measurement region (MR) is between 100 $\mu$m inclusively and 450 $\mu$m inclusively.

**2.** Device according to claim 1, wherein a product of the radius ($r_{PH}$) of the aperture opening and of the numerical aperture ($NA_{PH}$) on the side of the aperture opening (6) is between 1.0 $\mu$m inclusively and 5.5 $\mu$m inclusively.

**3.** Device according to one of the preceding claims, wherein the light source (3) and the light analysis unit are connected with the measurement head (4) by means of an optical fiber (7).

**4.** Device according to claim 3,
wherein the aperture opening (6) of the measurement head (5) is formed by a fiber end face (17) of the optical fiber (7).

**5.** Device according to claim 3 or 4,
wherein an optical element (8) is arranged on a fiber end face (17) facing the optical lens system (12).

**6.** Device according to claim 5,
wherein the optical element (8) is an optical window.

**7.** Device according to claim 5,
wherein the optical element (8) is a refractive divergent lens.

**8.** Device according to claim 5,
wherein the optical element (8) is a gradient-index divergent lens.

**9.** Device according to claim 5,
wherein the optical element (8) is a gradient-index converging lens.

**10.** Device according to claim 5,
wherein the optical element (8) is a gradient-index lens, which images a light spot of the light source (3) formed by the fiber end face (17) in one or more intermediate images.

**11.** Device according to one of claims 5 to 10,
wherein a distance element (9) is arranged between the fiber end face (17) and the optical element (8).

**12.** Device according to one of claims 5 to 11,
wherein the fiber end face (17) and a surface of the optical element (8) or of the distance element (9) facing the fiber end face (17) is configured obliquely to an optical axis (30).

**13.** Device according to one of the preceding claims,
wherein a beam deflector element (16) is arranged in the measurement head (5).

**Revendications**

**1.** Dispositif de mesure de distance optique sans contact, comprenant une source de lumière (3), une unité d'analyse de lumière (4) et une tête de mesure (5), dans lequel

   - la source de lumière (3) est une source de lumière polychromatique, qui convient pour l'émission de lumière (13) d'un spectre continu dans la tête de mesure (5), l'unité d'analyse de lumière (4) étant adaptée à recevoir et à analyser spectralement la lumière (14) reçue depuis la tête de mesure (5),
   - la tête de mesure (5) présente une ouverture de diaphragme (6) pour l'entrée de la lumière (13) de la source de lumière (3) dans la tête de mesure (5) et pour la sortie de la lumière reçue (14) depuis la tête de mesure (5) dans la direction de l'unité d'analyse de lumière (4),
   - la tête de mesure (5) présente un système de lentilles optiques (12), lequel présente une aberration chromatique longitudinale,
   - le système de lentilles optiques (12) ne se consiste en une première lentille réfractive (1) et en une deuxième lentille réfractive (2),
   - au moins l'une des lentilles réfractives (1, 2) a au moins une surface de lentille (11) courbée de manière asphérique,
   - la première lentille réfractive (1) comme la deuxième lentille réfractive (2) présentent un matériau optique avec un nombre d'Abbe de $20 \leq \nu_d \leq 41$,
   - le système de lentilles optiques (12) présente une aberration chromatique longitudinale telle qu'une plage de mesure (MR) équivalente à un déplacement du point focal axiale du système de lentilles optiques (12) compris entre les longueurs d'onde 450 nm et 700 nm, s'élève entre 0,2 mm inclus et 10 mm inclus, et
   - un produit issu de la plage de mesure (MR) et du carré de l'ouverture numérique ($NA^2_{MR}$) est entre 100 $\mu$m inclus et 450 $\mu$m inclus en termes de plage de mesure (MR).

**2.** Dispositif selon la revendication 1,
dans lequel un produit issu du rayon ($r_{PH}$) d'ouverture de diaphragme et de l'ouverture numérique ($NA_{PH}$) s'élève entre 1,0 $\mu$m inclus et 5,5 $\mu$m inclus en termes d'ouverture de diaphragme (6).

**3.** Dispositif selon l'une quelconque des revendications précédentes, dans lequel la source de lumière (3) et l'unité d'analyse de lumière (4) sont reliées à la tête de mesure (5) au moyen d'une fibre optique (7).

**4.** Dispositif selon la revendication 3, dans lequel l'ouverture du diaphragme (6) de la tête de mesure (5) est formée par une face d'extrémité des fibres (17) de la fibre optique (7).

**5.** Dispositif selon la revendication 3 ou 4, dans lequel un élément optique (8) est agencé à une face d'extrémité des fibres (17) tournée vers le système de lentilles optiques (12).

**6.** Dispositif selon la revendication 5, dans lequel l'élément optique (8) est une fenêtre optique.

**7.** Dispositif selon la revendication 5, dans lequel l'élément optique (8) est une lentille divergente réfractive.

**8.** Dispositif selon la revendication 5, dans lequel l'élément optique (8) est une lentille divergente à gradient d'indice.

**9.** Dispositif selon la revendication 5, dans lequel l'élément optique (8) est une lentille convergente à gradient d'indice.

**10.** Dispositif selon la revendication 5, dans lequel l'élément optique (8) est une lentille à gradient d'indice qui forme une tache lumineuse (3) de la source de lumière (3) formée par la face d'extrémité des fibres (17) dans une ou plusieurs images intermédiaires.

11. Dispositif selon l'une quelconque des revendications 5 à 10, dans lequel un élément d'espacement (9) est agencé entre la face d'extrémité des fibres (17) et l'élément optique (8).

12. Dispositif selon l'une quelconque des revendications 5 à 11, dans lequel la face d'extrémité des fibres (17) et une surface tournée vers ls face d'extrémité des fibres (17) de l'élément optique (8) ou de l'élément d'espacement (9) sont formées obliquement par rapport à un axe optique (30).

13. Dispositif selon l'une quelconque des revendications précédentes, dans lequel un élément de déviation de faisceau (16) est agencé dans la tête de mesure (5).

Fig. 1

Fig. 2A

Fig. 2B

Fig. 2C

Fig. 2D

Fig. 2E

Fig. 2F

Fig. 2G

Fig. 2H

Fig. 2I

Fig. 2J

Fig. 3

Fig. 4

Fig. 5

Fig. 6

Fig. 7

Fig. 8

Fig. 9

Fig.10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013113265
- DE 102006017400 A1
- US 20080239278 A1